# EUROPEAN PATENT APPLICATION

(11) **EP 4 517 991 A1**
(43) Date of publication of application: **05.03.2025**
(21) Application number: 23795299.9
(22) Date of filing: 23.04.2023
(51) Int. Cl.: H01M 50/383, H01M 10/613

(54) **BATTERY AND ELECTRIC APPARATUS**

(30) Priority: 26.04.2022 CN 202210447131
(71) Applicant: Contemporary Amperex Technology (Hong Kong) Limited, Central, Central And Western District (HK)
(72) Inventor: CHEN, Xiaobo, Ningde, Fujian 352100 (CN); HU, Lu, Ningde, Fujian 352100 (CN); WU, Shaoji, Ningde, Fujian 352100 (CN); WANG, Xuehui, Ningde, Fujian 352100 (CN); LUO, Xingguo, Ningde, Fujian 352100 (CN); LI, Yupin, Ningde, Fujian 352100 (CN)
(74) Representative: Kraus & Lederer PartGmbB
(86) International application number: PCT/CN2023/090150
(87) International publication number: WO 2023/207866

(57) **Abstract**

The present application provides a battery and an electrical device. The battery includes a battery cell and a release treating device. A pressure relief mechanism of the battery cell can release a substance inside the battery cell, a treating space of the release treating device is connected with the pressure relief mechanism, and a treating member in the treating space can treat the substance released by the pressure relief mechanism into the treating space to reduce a specified parameter of the substance. After the specified parameter of the substance is reduced, the possibility of combustion of the substance is greatly reduced, so that the battery is less prone to ignition when thermal runaway occurs, which is conducive to improving the safety of the battery.

## Description

### CROSS-REFERENCE TO RELATED APPLICATIONS

The present application claims priority to Chinese Patent Application No. 202210447131.9, entitled "BATTERY AND ELECTRICAL DEVICE" filed on April 26, 2022, which is incorporated herein by reference in its entirety.

### TECHNICAL FIELD

The present application relates to the field of battery technologies, in particular to a battery and an electrical device.

### BACKGROUND

Batteries are widely used in electronic devices, such as mobile phones, laptops, electric scooters, electric cars, electric airplanes, electric ships, electric toy cars, electric toy ships, electric toy planes, and electric tools due to their advantages of high specific energy, high power density, etc.

In the development of battery technologies, lithium-ion batteries have been widely used due to their advantages of high energy density, high output power, long cycle life, low environmental pollution, etc. At present, in addition to increasing energy densities of batteries, safety performance is also a non-negligible problem. If the safety problem of a battery cannot be guaranteed, the battery cannot be used. How to improve the safety of a battery has always been a research issue for those skilled in the art.

### SUMMARY

In view of the above problems, the present application provides a battery with high safety and an electrical device.

In a first aspect, the present application provides a battery including a battery cell and a release treating device, where the battery cell has a pressure relief mechanism configured to release a substance inside the battery cell; the release treating device includes a treating space configured to be connected to an outer surface of the pressure relief mechanism so as to allow the substance released by the pressure relief mechanism to enter the treating space; and the release treating device further includes a treating member for treating the substance to reduce a specified parameter of the substance, where the treating member is disposed in the treating space.

With the above structure, the substance released from the battery cell are treated by the treating member to reduce the specified parameter of the substance, and after the specified parameter of the substance is reduced, the possibility of combustion of the substance is greatly reduced, so that the battery is less prone to ignition when thermal runaway occurs, which is conducive to improving the safety of the battery.

In the battery provided in specific implementations of the present application, the specified parameter is at least one of temperature, concentration of combustible particles, or concentration of the combustible gas, so that the release treating device can reduce the possibility of combustion of the substance by reducing the specified parameter, and the battery is less prone to ignition, which is conducive to improving the safety of the battery.

In the battery provided in specific implementations of the present application, the treating member includes a spray assembly for spraying treating fluid into the treating space and a fluid supply assembly for delivering the treating fluid to the spray assembly, where the spray assembly is disposed in the treating space; and the fluid supply assembly is connected to the spray assembly.

In the battery provided in specific implementations of the present application, the battery includes a battery box in which the battery cell is placed, and the release treating device further includes a treating box in which the treating space is formed and which is provided with an opening connected to the treating space, and fits on an end surface of the battery box through the opening.

In the battery provided in specific implementations of the present application, the spray assembly is configured to face the end surface to spray the treating fluid towards the end surface, so that the treating fluid sprayed by the spray assembly can reach the end surface of the battery box, exchange heat with the battery box, and take away the heat generated by the battery cell during thermal runaway to cool the battery cell.

In the battery provided in specific implementations of the present application, the battery includes a box body in which a divider is provided to divide the box body into two spaces, one of the two spaces being the treating space, and the other of the two spaces being for placing the battery cell.

In the battery provided in specific implementations of the present application, the spray assembly is configured to face the divider, for allowing the treating fluid to exchange heat with the divider, and the treating fluid can take away the heat generated by the thermal runaway of the battery cell to cool the battery cell, which is conducive to reducing the possibility of danger and improving the safety of the battery.

In the battery provided in specific implementations of the present application, the spray assembly includes a fluid supply pipeline connected to the fluid supply assembly and a nozzle connected to the fluid supply pipeline, and the fluid supply pipeline is used for delivering the treating fluid to the nozzle.

In the battery provided in specific implementations of the present application, a connecting portion is disposed on the fluid supply pipeline, a connecting groove is disposed on an inner wall of the treating space, and the connecting portion is connected to the connecting groove, so that the treating member is fixed in the treating space, which can avoid movement of the fluid supply pipeline and the nozzle in the treating space and reduce the possibility of collision.

In the battery provided in specific implementations of the present application, the fluid supply pipeline is configured in a spiral shape and a plurality of the nozzles are provided at equal intervals along the fluid supply pipeline, so that the treating fluid sprayed by the nozzles can be uniformly distributed in the treating space, and the path and time for treating the substance by the sprayed treating fluid can be extended, which is conducive to improving the effect of treating the substance by the treating fluid.

In the battery provided in specific implementations of the present application, the fluid supply assembly includes a fluid tank and a fluid delivery power member, and the fluid delivery power member is connected between the fluid tank and an inlet of the fluid supply pipeline.

In the battery provided in specific implementations of the present application, the release treating device further includes a connecting channel configured to connect the treating space to the outer surface of the pressure relief mechanism, so that the substance released at the pressure relief mechanism can enter the treating space through the connecting channel for treating.

In the battery provided in specific implementations of the present application, a fluid blocking structure for blocking contact of the treating fluid with the battery cell is disposed in the connecting channel, which can avoid the impact of the treating fluid on the battery cell and is conducive to avoiding the problems of short-circuiting and the like in the battery cell due to the contact of the treating fluid.

In the battery provided in specific implementations of the present application, the fluid blocking structure includes a one-way valve, an inlet of the one-way valve is connected to the outer surface of the pressure relief mechanism, and an outlet of the one-way valve is connected to the treating space, so that the substance can flow only from the pressure relief mechanism to the treating space.

In the battery provided in specific implementations of the present application, the fluid blocking structure includes a bent portion for blocking the treating fluid from flowing to the pressure relief mechanism along the connecting channel.

In the battery provided in specific implementations of the present application, the battery cell includes a first end surface and a second end surface, the pressure relief mechanism is disposed on the first end surface, an electrode terminal is disposed on the second end surface, and the first end surface is opposite to the connecting channel, so that the electrode terminal can be far away from the pressure relief mechanism, which is conducive to reducing the possibility of contact between the treating fluid and the electrode terminal and improving the safety of the battery.

In the battery provided in specific implementations of the present application, the projection of the connecting channel at least partially overlaps with the projection of the pressure relief mechanism in a running-through direction of the connecting channel, so that the substance released by the pressure relief mechanism from a release port can flow into the connecting channel through a short path and then enter the treating space.

In the battery provided in specific implementations of the present application, the release treating device further includes a switch configured to connect the treating space to the outer surface of the pressure relief mechanism after being opened.

In the battery provided in specific implementations of the present application, the switch includes a weak portion configured to connect the treating space to the outer surface of the pressure relief mechanism after being destroyed.

In the battery provided in specific implementations of the present application, the battery cell includes a first end surface and a second end surface, the pressure relief mechanism is disposed on the first end surface, an electrode terminal is disposed on the second end surface, the first end surface is opposite to the weak portion, and the pressure relief mechanism and the electrode terminal are disposed at two ends of the battery cell respectively, so that the electrode terminal can be far away from the pressure relief mechanism, which is conducive to reducing the possibility of contact between the treating fluid and the electrode terminal and improving the safety of the battery.

In the battery provided in specific implementations of the present application, in a thickness direction of the weak portion, a projection of the weak portion at least partially overlaps with a projection of the pressure relief mechanism, so that the substance released by the pressure relief mechanism from the release port can act on the switch formed by the weak portion.

In the battery provided in specific implementations of the present application, the release treating device further includes a discharge channel configured to connect the treating space to an external space of the battery. The substance treated in the treating space are discharged to the external space of the battery via the discharge channel, thereby reducing accumulation of the released substance in the battery.

In the battery provided in specific implementations of the present application, the release treating device further includes a discharge switch, the discharge switch is disposed in the discharge channel, and the discharge switch is configured to connect the treating space to the external space of the battery through the discharge channel after being opened.

In the battery provided in specific implementations of the present application, the battery further includes a recycling module for recycling the treating fluid, and the recycling module is connected to the treating space.

In the battery provided in specific implementations of the present application, the release treating device includes a recycling portion disposed in the treating space, the recycling portion is configured to protrude towards a bottom of the release treating device to form a recycling groove, the recycling portion is provided with a recycling hole in the protruding direction, and the recycling hole connects the recycling module with the recycling groove. The treating fluid collected by the recycling groove can be introduced into the recycling module via the recycling hole.

In the battery provided in specific implementations of the present application, the recycling module includes a recycling power member and a recycling tank, an input end of the recycling power member is connected to the recycling hole, and an output end of the recycling power member is connected to the recycling tank, so that the treating fluid can quickly flow to the recycling tank under the action of the recycling power member.

In the battery provided in specific implementations of the present application, the recycling module further includes a filter member, and the filter member is connected between the recycling hole and the input end of the recycling power member to filter the treating fluid and separate impurities such as combustible particles from the treating fluid, thereby improving the cleanliness of the treating fluid.

In a second aspect, the present application further provides an electrical device. The electrical device includes the battery provided in any of the foregoing technical solutions for providing electrical energy.

The technical solutions provided in the embodiments of the present disclosure bring at least the following beneficial effects:
In the battery provided by the present application that includes the battery cell and the release treating device, the pressure relief mechanism of the battery cell can release a substance inside the battery cell, the treating space of the release treating device is connected to the pressure relief mechanism, and the treating member in the treating space can treat the substance released by the pressure relief mechanism into the treating space to reduce a specified parameter of the substance. After the specified parameter of the substance is reduced, the possibility of combustion of the substance is greatly reduced, so that the battery is less prone to ignition when thermal runaway occurs, which is conducive to improving the safety of the battery.

The present application provides an electrical device, which includes the battery provided in the above technical solutions, so the electrical device has high safety.

The above description is only a summary of the technical solutions of the present application. In order to understand the technical means in the present application more clearly, it can be implemented in accordance with the content of the specification; and in order to make the above and other objectives, features and advantages of the present application more obvious and easier to understand, and specific embodiments of the present application are cited below.

### DESCRIPTION OF THE DRAWINGS

Other advantages and benefits will become apparent to those of ordinary skill in the art by reading detailed description of the preferred implementations below. The accompanying drawings are only used to illustrate the preferred implementations and are not considered as a limitation on the present application. Throughout the accompanying drawings, the same reference numerals represent the same components. In the accompanying drawings:
Fig. 1 is a schematic structural diagram of a vehicle provided in some embodiments of the present application;
Fig. 2 is an exploded structural diagram of a battery in some embodiments of the present application;
Fig. 3 is an exploded structural diagram of a battery cell in some embodiments of the present application;
Fig. 4 is a split structural diagram of a battery in some embodiments of the present application;
Fig. 5 is a split structural diagram of structures in a treating box in some embodiments of the present application;
Fig. 6 is a schematic structural diagram of a one-way valve in a fluid blocking structure in some embodiments of the present application;
Fig. 7 is a schematic structural diagram of a bent portion in the fluid blocking structure in some embodiments of the present application;
Fig. 8 is a schematic structural diagram of the treating box in the battery in some embodiments of the present application from a first perspective;
Fig. 9 is a schematic structural diagram of the treating box in the battery in some embodiments of the present application from a second perspective; and
Fig. 10 is a schematic structural diagram of a recycling module in the battery in some embodiments of the present application.

The reference numerals in specific implementations are as follows: 20. Battery cell; 21. End cover; 22. Shell; 23. Cell core assembly; 200. Controller; 300. Motor; 1000. Vehicle; 1. Battery cell; 2. Treating space; 3. Treating member; 31. Spray assembly; 311. Fluid supply pipeline; 3112. Connecting portion; 312. Nozzle; 32. Fluid supply assembly; 321. Fluid tank; 322. Fluid delivery power member; 4. Battery box; 5. Treating box; 50. Cover plate; 51. Recycling portion; 511. Recycling hole; 52. Recycling groove; 6. Connecting channel; 61. One-way valve; 62. Bent portion; 7. Discharge channel; 71. Discharge switch; 8. Recycling power member; 9. Recycling tank; 10. Filter member.

### DETAILED DESCRIPTION

The embodiments of the technical solutions of the present application will be described in detail below with reference to the accompanying drawings. The following embodiments are only used to illustrate the technical solutions of the present application more clearly, and therefore are only examples and cannot be used to limit the protection scope of the present application.

It should be noted that, unless otherwise specified, the technical or scientific terms used in the embodiments of the present application shall have the ordinary meaning understood by those skilled in the art to which the embodiments of the present application belong.

In the description of the embodiments of the present application, an orientation or positional relationship indicated by the technical term "center", "longitudinal", "transverse", "length", "width", "thickness", "upper", "lower", "front", "back", "left", "right", "vertical", "horizontal", "top", "bottom", "internal", "external", "clockwise", "counterclockwise", "axial direction", "radial direction", "circumferential direction", or the like is based on an orientation or positional relationship shown in the accompanying drawings, and is merely for ease of describing the embodiments of the present application and simplifying the description, but does not indicate or imply that an apparatus or an element referred to must have a specific orientation or be constructed and operated in a specific orientation, and therefore cannot be understood as a limitation on the embodiments of the present application.

In addition, the technical terms "first", "second", etc. are only for the sake of description, and cannot be understood as indicating or implying the relative importance or implicitly indicating the quantity of technical features indicated. In the description of the embodiments of the present application, the meaning of "a plurality of" is two or more, unless otherwise specifically defined.

In the description of the embodiments of the present application, unless otherwise explicitly specified and defined, the technical terms "mounted", "connected", "connection", "fixed", etc. should be understood in a broad sense, for example, the "connection" may be fixed connection, detachable connection, integration, mechanical connection, electrical connection, direct connection, indirect connection via an intermediate medium, internal communication between two elements, or interaction between two elements. Those of ordinary skill in the art may appreciate the specific meanings of the foregoing terms in the embodiments of the present application according to specific circumstances.

In the description of the embodiments of the present application, unless otherwise expressly specified and defined, a first feature "above" or "below" a second feature indicates that the first feature and the second feature are in direct contact, or are in indirect contact through an intermediate medium. Moreover, the first feature "on", "above", and "up" the second feature may be the first feature right above or obliquely above the second feature, or merely indicates that the level of the first feature is higher than that of the second feature. The first feature "below", "under", and "down" the second feature may be the first feature right below or obliquely below the second feature, or merely indicates that the level of the first feature is lower than that of the second feature.

At present, in view of the development of the market situation, use of batteries is increasingly widespread. Batteries are not only used in energy storage power systems such as hydropower, firepower, wind power, and solar power plants, but also widely used in electric vehicles such as electric bicycles, electric motorcycles, and electric cars, as well as in various fields such as military equipment and aerospace. With the continuous expansion of the application fields of batteries, their market demand is also increasing.

Existing batteries often discharge high-temperature mixtures when thermal runaway occurs. When the high-temperature mixtures are discharged from the batteries and come into full contact with air, the batteries are prone to deflagration or even explosion, which will affect the safety of relevant users.

Based on the above phenomenon, the inventor designed a cooling apparatus to cool a battery. However, the inventor further discovered that, even if the battery is cooled, when thermal runaway occurs, the battery still discharges high-temperature mixtures to the outside, posing a safety risk.

Therefore, the inventor's research suggested that non-combustible treatment can be performed on combustible smoke generated by thermal runaway of a battery cell. In order to treat smoke so as to reduce its flammability, the inventor found in research that a treatment structure may be disposed to treat the smoke generated by thermal runaway, so as to reduce a parameter related to flammability in the smoke, reduce the possibility of combustion of the smoke, and make the battery less prone to ignition when thermal runaway occurs, thereby improving the safety of the battery.

Based on the above considerations, in order to improve the processing performance of a current collector, the inventor conducted in-depth research and designed a battery, in which a release treating device is disposed, a treating space of the release treating device is connected to a pressure relief mechanism of a battery cell, and when a substance released by the pressure relief mechanism enters the treating space, a treating member treats the released substance, so as to reduce a specified parameter, greatly reduce the possibility of combustion of the substance, and make the battery less prone to ignition when thermal runaway occurs, thereby improving the safety of the battery.

The battery cell disclosed in the embodiments of the present application may be, but is not limited to, a rechargeable battery cell. The rechargeable battery cell refers to a battery that can activate active materials by means of charging after the battery cell is discharged and continue to be used. A pressure relief mechanism is disposed on the battery cell, and the pressure relief mechanism can release substances inside the battery cell to achieve pressure relief when thermal runaway occurs in the battery cell.

The embodiments of the present application provide a battery cell. The battery cell may be used in an electrical device such as, but not limited to, a vehicle, a ship, or an aircraft. A power system of the electrical device may be constituted by the battery cell, the battery, or the like disclosed in the present application. In this case, the possibility of combustion of smoke discharged from the battery cell can be reduced, so the battery cell or the battery is less prone to ignition when thermal runaway occurs in the battery cell or the battery, and the safety of the battery cell and the battery can be improved.

An embodiment of the present application provides an electrical device using a battery as a power supply. The electrical device may be, but is not limited to, a mobile phone, a tablet computer, a notebook computer, an electric toy, an electric tool, a scooter, an electric vehicle, a ship, or a spacecraft. The electric toy may include a fixed or mobile electric toy, such as a game console, an electric car toy, an electric ship toy, or an electric aircraft toy. The spacecraft may include an airplane, a rocket, a space shuttle, a spaceship, or the like.

For convenient description, the following embodiments are described by an example of a vehicle 1000 as an electrical device in an embodiment of the present application.

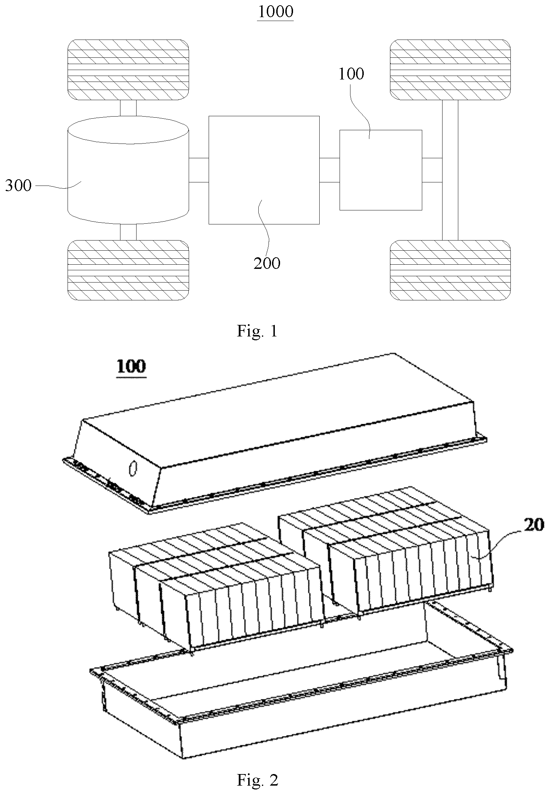

Refer to Fig. 1, which is a schematic structural diagram of a vehicle 1000 provided in some embodiments of the present application. The vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be used for supplying power to the vehicle 1000. For example, the battery 100 may be used as an operation power supply of the vehicle 1000. The vehicle 1000 may further include a controller 200 and a motor 300. The controller 200 is used to control the battery 100 to supply power to the motor 300, for example, to meet the requirements for working electricity of the vehicle 1000 during startup, navigation and driving.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Refer to Fig. 2, which is a schematic structural diagram of a battery 100 provided in some embodiments of the present application. The battery 100 includes a battery cell 20. The battery 100 may also include a plurality of battery cells 20, which may be in a series connection, a parallel connection, or a hybrid connection. The hybrid connection refers to a combination of series connection and parallel connection among the plurality of battery cells 20. The battery 100 may be in a form of a battery module constituted by a plurality of battery cells 20 connected in series, in parallel, or in hybrid, and then a plurality of battery modules are connected in series, in parallel, or in hybrid to form a whole accommodated in a box body 10. The battery 100 may further include other structures, for example, the battery 100 may further include a busbar for achieving electrical connection among the plurality of battery cells 20.

Each battery cell 20 may be a secondary battery or a primary battery, or may be a lithium-sulfur battery, a sodium-ion battery, or a magnesium-ion battery, but is not limited to this. The battery cells 20 may be cylindrical, flat, cuboid, or in other shapes.

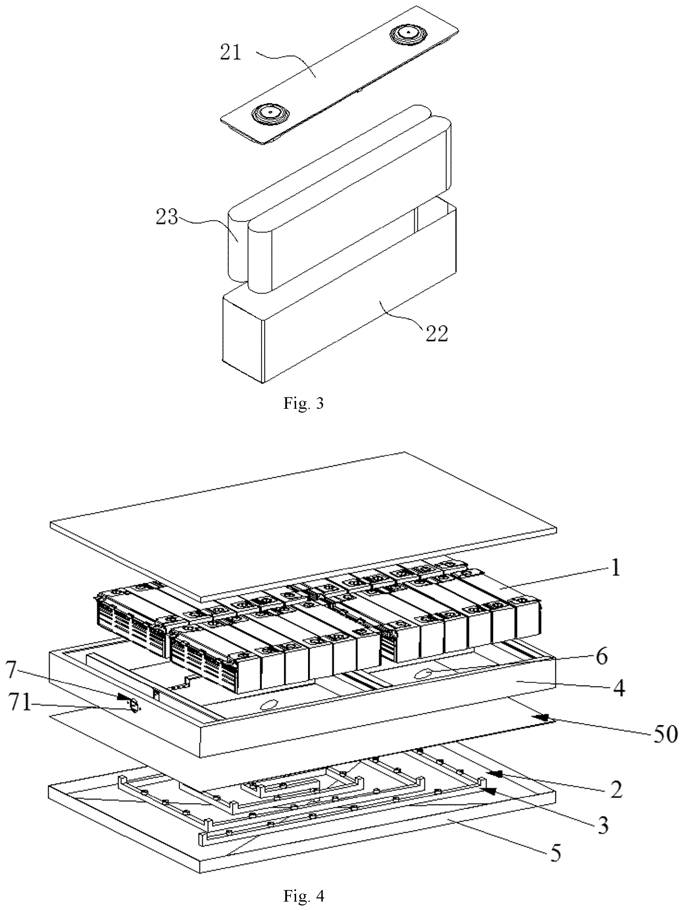

Refer to Fig. 3, which is an exploded structural diagram of a battery cell 20 provided in some embodiments of the present application. The battery cell 20 refers to the minimum unit that constitutes a battery. As shown in Fig. 3, the battery cell 20 includes an end cover 21, a shell 22, a cell core assembly 23, a pressure relief mechanism (not shown), and other functional components.

According to some embodiments of the present application, Fig. 4 is a schematic split diagram of a battery provided in some embodiments of the present application. The present application provides a battery which includes a battery cell 1 and a release treating device. The battery cell 1 has a pressure relief mechanism configured to be able to release a substance inside the battery cell 1, the release treating device includes a treating space 2 configured to be able to be connected to an outer surface of the pressure relief mechanism so as to allow the substance released by the pressure relief mechanism to enter the treating space 2. The release treating device further includes a treating member 3 for treating the substance to reduce a specified parameter of the substance, and the treating member 3 is disposed in the treating space 2.

The pressure relief mechanism may refer to a structure disposed on the battery cell 1, which can open when thermal runaway occurs in the battery cell 1 and the internal pressure exceeds a preset value, to release the substance inside the battery cell 1, so as to reduce the internal pressure of the battery cell 1 and improve the safety of the battery cell 1.

The treating space 2 may refer to a space formed by the release treating device. The treating space 2 is connected to the outer surface of the pressure relief mechanism, so that the substance released by the pressure relief mechanism can discharge into the treating space 2. The treating space 2 can temporarily accommodate the substance. In the battery 100, the treating space 2 may be independent of the space for placing the battery cell 1, or the treating space 2 and the space for placing the battery cell 1 may be configured as the same, so the discharged substance can be treated quickly and promptly, thereby improving the safety of the battery.

The treating member 3 may refer to a device with a function of treating substance, which is disposed in the treating space 2 and can treat the substance in the treating space 2, so that the specified parameter of the substance in the treating space 2 is reduced.

With the above solution, the substance released from the battery cell 1 is treated by the treating member 3 to reduce the specified parameter of the substance, and after the specified parameter of the substance is reduced, the possibility of combustion of the substance is greatly reduced, so that the battery is less prone to ignition when thermal runaway occurs, which is conducive to improving the safety of the battery.

**In** some embodiments of the present application, the specified parameter is at least one of temperature, concentration of combustible particles, or concentration of the combustible gas.

The temperature refers to the temperature of the substance. After the temperature of the substance decreases, the temperature of the substance is lower than an ignition point of the substance, so that the substance is less prone to ignition and combustion. The concentration of combustible particles refers to the quantity of combustible particles contained in the substance per unit volume. After the concentration of combustible particles decreases, the substance will be less prone to ignition. The concentration of a combustible gas refers to the quantity of the combustible gas contained in the substance per unit volume. After the concentration of the combustible gas decreases, the substance will be less prone to ignition. By reducing the above specified parameter, the probability of combustion of the substance will be effectively reduced, so that the battery is less prone to ignition, and the safety of the battery can be improved.

**In** some embodiments of the present application, the treating member 3 includes a spray assembly 31 configured to spray treating fluid into the treating space 2 and disposed in the treating space 2; a fluid supply assembly 32 that is connected to the spray assembly 31 for supplying the treating fluid to the spray assembly 31.

The spray assembly 31 may refer to a combined component that can spray the treating fluid and scatter the treating fluid to form fine water drops. The spray assembly 31 is mounted in the treating space 2 and can spray the treating fluid into the treating space 2 to increase the contact area between the treating fluid and the substance in the treating space 2, which is conducive to improving the effect and efficiency of treating the substance by the treating member 3.

After coming into contact with the substance, the treating fluid can not only exchange heat with the substance to reduce the temperature of the substance, but also can capture combustible particles in the substance to reduce the concentration of the combustible particles in the substance. The treating fluid may be ultra-pure water, fluorinated fluid, or the like. Such fluid is highly inert and less prone to chemical reaction with the substance, which is conducive to improving the safety of the treating fluid during use. After heated, the treating fluid can quickly vaporize to take away the heat from the substance. Meanwhile, the vaporized treating fluid can also reduce the concentration of the combustible particles or the combustible gas in the substance.

The fluid supply assembly 32 can deliver the treating fluid with certain pressure to the spray assembly 31, and the treating fluid can be sprayed into the treating space 2 by the spray assembly 31 under the pressure, which is conducive to expanding the spray area of the spray assembly 31 and improving the uniformity of spraying, so that the substance released by the pressure relief mechanism comes into contact with the treating fluid more easily.

In some embodiments of the present application, the battery includes a battery box 4, the battery cell 1 is placed in the battery box 4, the release treating device further includes a treating box 5 in which the treating space 2 is formed, the treating box 5 is provided with an opening connected to the treating space 2, and the treating box 5 covers an end surface of the battery box 4 through the opening.

The battery box 4 may be a structure in form of a box body in which an accommodating space is formed, the battery cell 1 is placed in the accommodating space, and the battery box 4 can protect the battery cell 1. Optionally, the battery cell 1 is in contact with the battery box 4, so that the battery cell 1 and the battery box 4 can exchange heat. The treating box 5 may be a structure of box body that encloses the treating space 2 to accommodate and treat the substance released by the pressure relief mechanism. The opening may refer to a structure formed at the treating box 5, and it is connected to the treating space 2, so that the treating box 5 has an open structure, and the treating box 5 can cover the outer end surface of the battery box 4 through the opening.

In some embodiments of the present application, a cover plate 50 may be disposed on the opening of the treating box 5, the cover plate 50 is fixedly connected to the outer end surface of the battery box 4 by welding, and there is good heat transfer between the cover plate 50 and the battery box 4.

With the above structure, the release treating device can be located outside the battery box 4, so the release treating device does not occupy the space inside the battery box 4, which is conducive to alleviating the constraints of the internal space of the battery box 4, increasing the proportion of the battery cell 1 in the internal space of the battery box 4, and increasing the energy density of the battery.

Moreover, with the above structure, the release treating device is disposed outside the battery box 4, which facilitates separate assembly of the battery box 4 and the release treating device during production. The two are assembled separately and then assembled together, which can effectively improve the manufacturing efficiency of this type of product and is conducive to mass production of the product.

In some embodiments of the present application, the spray assembly 31 is configured to face the end surface, so as to spray the treating fluid towards the end surface.

The spray assembly 31 faces the end surface, so that the treating fluid sprayed by the spray assembly 31 can reach the end surface of the battery box 4, exchange heat with the battery box 4, and take away the heat generated by the battery cell 1 during thermal runaway to cool the battery cell 1, which is conducive to reducing the possibility of danger and improving the safety of the battery.

With the above solution, the treating fluid can not only treat the substance, but also can cool the battery, which is conducive to improving the safety of the battery.

In some embodiments of the present application, the battery includes a box body in which a divider is provided to divide the box body into two spaces, one of the two spaces being the treating space 2, and the other of the two spaces being for placing the battery cell 1.

The box body may refer to a structure in which an accommodating cavity is formed, and can protect the components in the accommodating cavity. The divider may refer to a structural member disposed in the box body, and can divide the accommodating cavity in the box body into two spaces, one being the treating space 2 and the other for placing the battery cell 1. Optionally, the battery cell 1 is in contact with the divider, so that the battery cell 1 and the divider can exchange heat.

In some embodiments of the present application, the spray assembly 31 is configured to face the divider, for allowing the treating fluid to exchange heat with the divider.

The spray assembly 31 faces the divider, so that the treating fluid sprayed by the spray assembly 31 can reach the divider, exchange heat with the divider, and take away the heat generated by the battery cell 1 during thermal runaway to cool the battery cell 1, which is conducive to reducing the possibility of danger and improving the safety of the battery.

With the above solution, the treating fluid can not only treat the substance, but also can cool the battery cell 1, which is conducive to improving the safety of the battery.

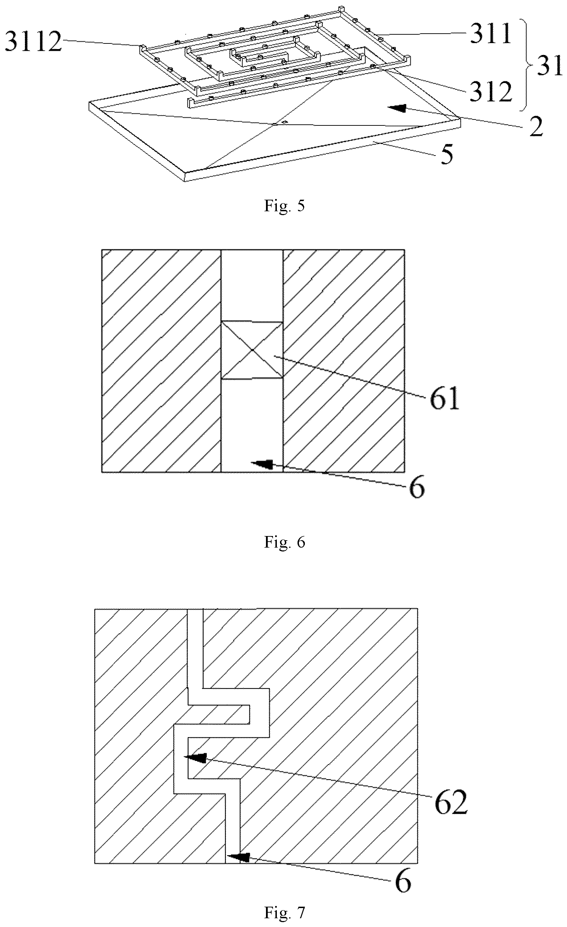

In some embodiments of the present application, as shown in Fig. 5, the spray assembly 31 includes a fluid supply pipeline 311 and a nozzle 312, the nozzle 312 is connected to the fluid supply pipeline 311, and the fluid supply pipeline 311 is connected to the fluid supply assembly 32.

The nozzle 312 may refer to a device disposed in the treating space 2, and can treat the treating fluid into small droplets and spray the small droplets towards the treating space 2 to atomize the treating fluid, so that the treating fluid has a large area of contact with the substance, which is conducive to improving the effect of treating the substance.

The fluid supply pipeline 311 may refer to a pipeline that can be arranged in the treating space 2, is connected to the nozzle 312, and can deliver the treating fluid with certain pressure to the nozzle 312. Optionally, the nozzle 312 is connected to the fluid supply pipeline 311 to achieve relative fixation between the nozzle 312 and the fluid supply pipeline 311.

In some embodiments of the present application, a connecting portion 3112 is disposed on the fluid supply pipeline 311, a connecting groove is disposed on an inner wall of the treating space 2, and the connecting portion 3112 is connected to the connecting groove.

The connecting portion 3112 may refer to a raised structure disposed on the fluid supply pipeline 311, and it may be formed by connecting a block structure to the fluid supply pipeline 311 through welding or bolt connection, or integrally formed with the fluid supply pipeline 311 in the manufacturing process of the fluid supply pipeline 311. Those skilled in the art can choose a method of forming the connecting portion 3112 according to an actual situation.

The inner wall of the treating space 2 may refer to a side of the wall enclosing the treating space 2 that is close to the treating space 2. When the treating space 2 is formed by dividing the box body by the divider, the inner wall of the treating space 2 may be a side of the divider that is close to the treating space 2, or a side of the box body that is close to the treating space 2. When the treating space 2 is formed by the treating box 5, the inner wall of the treating space 2 may be the end surface of the battery box 4 that covers the opening of the treating box 5, or an inner side surface of the treating box 5 that is close to the treating space 2,.

The connecting groove may refer to a groove structure disposed on the inner wall of the treating space 2 and matches the connecting portion 3112, and the connecting portion 3112 can be inserted into the connecting groove. By disposing the connecting groove on the inner wall of the treating space 2 that matches the connecting portion 3112, the treating member 3 is fixed in the treating space 2, which can avoid movement of the fluid supply pipeline and the nozzle in the treating space and reduce the possibility of collision.

In some embodiments of the present application, the fluid supply pipeline 311 is configured in a spiral shape, and a plurality of nozzles 312 are provided, and the plurality of nozzles 312 are disposed at equal intervals along the fluid supply pipeline 311.

The spiral shape may refer to a shape formed by bending the fluid supply pipeline 311 multiple times. The fluid supply pipeline 311 is arranged in the spiral shape in the treating space 2, which is conducive to uniform distribution of the fluid supply pipeline 311 in the treating space 2.

The plurality of nozzles 312 are disposed at equal intervals along the fluid supply pipeline 311, so that the plurality of nozzles 312 on the fluid supply pipeline 311 can be uniformly arranged in the treating space 2, and the treating fluid sprayed by the nozzles 312 can be uniformly distributed in the treating space 2, which is conducive to improving the effect and efficiency of treating the substance by the treating fluid.

In some embodiments of the present application, the fluid supply assembly 32 includes a fluid tank 321 and a fluid delivery power member 322, and the fluid delivery power member 322 is connected between the fluid tank 321 and an inlet of the fluid supply pipeline 311.

In some embodiments of the present application, the fluid supply assembly 32 is arranged on the battery, and the fluid supply assembly 32 is connected to the battery box 4 by connectors such as connecting bolts, so that the fluid supply assembly 32 can be mounted together with the battery box 4 conveniently. In some embodiments of the present application, the fluid supply assembly 32 may alternatively be arranged on an electrical device such as a vehicle, and the fluid supply assembly 32 is connected to the fluid supply pipeline 311 through a fluid delivery pipeline. The fluid supply assembly 32 is arranged on an electrical device for a vehicle, which can reduce the weight and structural redundancy of the battery. Those skilled in the art can choose the position of the fluid supply assembly 32 according to an actual situation.

The fluid tank 321 may refer to a tank structure with a storage space inside, where the storage space contains the treating fluid. The fluid delivery power member 322 may be a fluid delivery pump, which can extract the treating fluid from the fluid tank 321 and deliver the treating fluid from the fluid tank 321 to the fluid supply pipeline 311 at certain pressure through the fluid supply pipeline 311, so that the treating fluid can be uniformly sprayed in the treating space 2 under its own pressure.

In some embodiments of the present application, the release treating device further includes a connecting channel 6 configured to connect the treating space 2 to the outer surface of the pressure relief mechanism.

The connecting channel 6 may refer to a channel structure for connecting the treating space 2 with the outer surface of the pressure relief mechanism, which may be a channel structure formed in a component structure of the battery. For example, when the treating space 2 is formed by dividing the box body by the divider, the connecting channel 6 may be a channel formed on the divider. When the treating space 2 is formed by the treating box 5, the connecting channel 6 may be a channel formed on the end surface of the box body. Alternatively, an additional connecting pipeline may be used as the channel structure to connect the treating space 2 to the outer surface of the pressure relief mechanism.

In some embodiments of the present application, a fluid blocking structure for blocking contact of the treating fluid with the battery cell 1 is disposed in the connecting channel 6.

The fluid blocking structure may refer to a structure, which enables the substance discharged by the battery cell 1 during thermal runaway to flow into the treating space 2, and blocks the treating fluid in the treating space 2 from flowing to the pressure relief mechanism, thereby preventing the contact of the treating fluid with the battery cell 1 and reducing the probability of short-circuiting in the battery cell 1.

In some embodiments of the present application, as shown in Fig. 6, the fluid blocking structure includes a one-way valve 61, an inlet of the one-way valve 61 is connected to the outer surface of the pressure relief mechanism, and an outlet of the one-way valve 61 is connected to the treating space 2.

The one-way valve 61 connects the inlet with the outer surface of the pressure relief mechanism, and the outlet with the treating space 2, so that the substance can flow only from the pressure relief mechanism to the treating space 2, which can prevent the treating fluid from flowing to the pressure relief mechanism, avoid the contact of the treating fluid with the battery cell 1, and reduce the probability of short-circuiting in the battery cell 1.

In some embodiments of the present application, as shown in Fig. 7, the fluid blocking structure includes a bent portion 62 for blocking the treating fluid from flowing to the pressure relief mechanism along the connecting channel 6.

The bent portion 62 may be of an S-shaped bent structure disposed in the connecting channel 6, the structure can block the treating fluid, and the treating fluid is blocked from flowing to the pressure relief mechanism when flowing to the bent portion 62 along the connecting channel 6.

In some embodiments of the present application, the battery cell 1 includes a first end surface and a second end surface, the pressure relief mechanism is disposed on the first end surface, an electrode terminal is disposed on the second end surface, and the first end surface is opposite to the connecting channel 6.

The first end surface and the second end surface may refer to two opposite end surfaces of the battery cell 1, and the pressure relief mechanism and the electrode terminal are disposed at two ends of the battery cell 1, so that the electrode terminal can be far away from the pressure relief mechanism, which is conducive to reducing the possibility of contact between the treating fluid and the electrode terminal and improving the safety of the battery.

In some embodiments of the present application, the projection of the connecting channel 6 at least partially overlaps with that of the pressure relief mechanism in a running-through direction of the connecting channel 6, so that a release port of the pressure relief mechanism can be at least partially aligned with an interface of the connecting channel 6, and the substance released by the pressure relief mechanism from the release port can flow into the connecting channel 6 through a short path and then enter the treating space.

In some embodiments of the present application, the release treating device further includes a switch configured to be able to connect the treating space 2 with the outer surface of the pressure relief mechanism after being opened.

The switch may refer to a structure for establishing or interrupting the connection relationship between the treating space 2 and the outer surface of the pressure relief mechanism. The switch allows controllable connection between the treating space 2 and the pressure relief mechanism, so that an operator can establish or interrupt the connection between the treating space 2 and the outer surface of the pressure relief mechanism according to actual needs.

When the pressure relief mechanism is activated to release, the switch may be opened to connect the treating space 2 to the pressure relief mechanism. When the pressure relief mechanism is not activated but remains closed, the switch disconnects the treating space 2 from the pressure relief mechanism. The switch may be opened under the action of the released substance or opened independently by a release mechanism, after the pressure relief mechanism releases.

In some embodiments of the present application, the switch includes a weak portion configured to be able to connect the treating space 2 with the outer surface of the pressure relief mechanism after being destroyed.

The weak portion may refer to a structure that is prone to rupture under force, and it blocks the way between the treating space 2 and the outer surface of the pressure relief mechanism. After the pressure relief mechanism releases, the weak portion ruptures under the action of the released substance, allowing the connection of the treating space 2 to the outer surface of the pressure relief mechanism.

In some embodiments with the switch provided in the above technical solution, the battery cell 1 includes a first end surface and a second end surface, the pressure relief mechanism is disposed on the first end surface, an electrode terminal is disposed on the second end surface, and the first end surface is opposite to the weak portion.

The first end surface and the second end surface may refer to two opposite end surfaces of the battery cell 1, and the pressure relief mechanism and the electrode terminal are disposed at two ends of the battery cell 1, so that the electrode terminal can be far away from the pressure relief mechanism, which is conducive to reducing the possibility of contact between the treating fluid and the electrode terminal and improving the safety of the battery.

In some embodiments of the present application, in a thickness direction of the weak portion, a projection of the weak portion at least partially overlaps with that of the pressure relief mechanism, so that the release port of the pressure relief mechanism can be at least partially aligned with the switch formed by the weak portion, and the substance released by the pressure relief mechanism from the release port can act on the switch formed by the weak portion.

In some embodiments of the present application, the release treating device further includes a discharge channel 7, and the discharge channel 7 can connect the treating space 2 to an external space of the battery.

The discharge channel 7 may refer to a channel structure for connecting the treating space 2 to the external space of the battery, which may be a channel structure formed in a component structure of the battery. For example, when the treating space 2 is formed by dividing the box body by the divider, the connecting channel 6 may be a channel formed on the divider. When the treating space 2 is formed by the treating box 5, the connecting channel 6 may be a channel formed on the end surface of the battery box 4. Alternatively, an additional connecting pipeline may be used as the channel structure to connect the treating space 2 to the external space of the battery.

By setting the discharge channel 7, the substance treated in the treating space 2 are discharged to the external space of the battery via the discharge channel 7, thereby reducing accumulation of the released substance in the battery. The specified parameter of the substance treated in the treating space 2 is reduced. After the specified parameter of the substance is reduced, the possibility of combustion of the substance is greatly reduced, and the substance is less prone to ignition after being discharged out of the battery, which is conducive to improving the safety of the battery.

In some embodiments of the present application, the release treating device further includes a discharge switch 71, the discharge switch 71 is disposed in the discharge channel 7, and the discharge switch 71 is configured to connect the treating space 2 to the external space of the battery through the discharge channel 7 after being opened.

The discharge switch 71 refers to a switch structure disposed in the discharge channel 7, which can be opened to connect the discharge channel 7 when the pressure relief mechanism is activated to release, and can disconnect the discharge channel 7 when the pressure relief mechanism is not activated but remains closed. The discharge switch 71 may be opened under the action of the released substance after the pressure relief mechanism releases, or opened independently by a release mechanism, or kept in an open state after being controlled by an operator.

In some embodiments of the present application, the switch includes a safety valve, the safety valve is closed when the pressure relief mechanism is not opened, and the safety valve is opened when the pressure relief mechanism is opened, so that the substance in the treating space 2 can be discharged to the external space of the battery through the discharge channel 7.

In some embodiments of the present application, the battery further includes a recycling module, and the recycling module is connected to the treating space 2 to recycle the treating fluid.

The recycling module may refer to a module for recycling the treating fluid in the treating space 2, which can collect the treating fluid in the treating space 2 for subsequent treatment or reuse, thereby reducing waste of the treating fluid.

In some embodiments, the recycling module is arranged on the battery, and the recycling module may be connected to the battery box 4 by connectors such as connecting bolts, so that the recycling module can be mounted together with the battery box 4 conveniently. In some embodiments of the present application, the recycling module may alternatively be arranged on an electrical device such as a vehicle, and the recycling module is connected to the treating space 2 through a pipe. The recycling module is arranged on the electrical device such as a vehicle, which can reduce the weight and structural redundancy of the battery. Those skilled in the art can choose the position of the recycling module according to an actual situation.

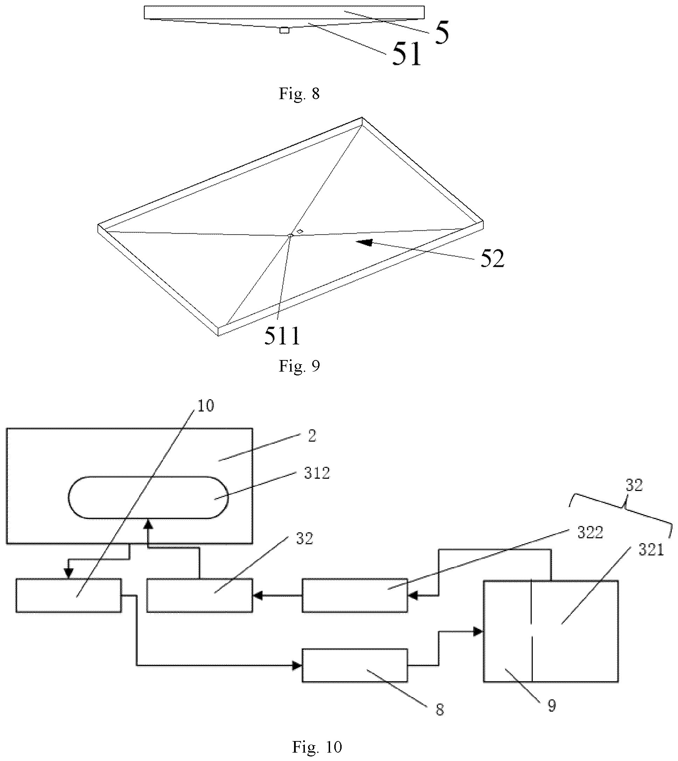

In some embodiments of the present application, as shown in Fig. 8, the release treating device includes a recycling portion 51 disposed in the treating space 2. As shown in Fig. 9, the recycling portion 51 is configured to protrude towards a bottom of the release treating device to form a recycling groove 52, the recycling portion 51 is provided with a recycling hole 511 in the protruding direction, and the recycling hole 511 connects the recycling module to the recycling groove 52.

The recycling portion 51 may refer to a structure disposed in the treating space 2. When the treating space 2 is formed by dividing the box body by the divider, the recycling portion 51 may be a structure formed by the box body. When the treating space 2 is formed by the treating box 5, the recycling portion 51 may be a structure formed by the treating box 5.

The recycling portion 51 protrudes towards the bottom of the release treating device to form the recycling groove 52, so that the treating fluid in the treating space 2 gathers in the recycling groove 52 under the force of its own gravity, which is conducive to centralized recycling or treatment of the treating fluid.

The recycling hole 511 may refer to a hole structure formed on the recycling portion 51, which is connected to the recycling module and the recycling groove 52 and can introduce the treating fluid collected by the recycling groove 52 into the recycling module. In some embodiments, the recycling hole 511 is connected to a lowest end of the recycling groove 52 in a height direction, so that the gathering treating fluid can flow away as much as possible from the recycling hole 511.

In some embodiments of the present application, as shown in Fig. 10, the recycling module includes a recycling power member 8 and a recycling tank 9, an input end of the recycling power member 8 is connected to the recycling hole 511, and an output end of the recycling power member 8 is connected to the recycling tank 9.

The recycling power member 8 may be a return pump, which can extract the treating fluid from the recycling groove 52 and deliver the treating fluid to the recycling tank 9, so that the treating fluid can quickly flow to the recycling tank 9 under the action of the recycling pump.

The recycling tank 9 may refer to a tank structure with a storage space inside, where the storage space can contain the treating fluid, and the recycling power member 8 can deliver the treating fluid to the recycling tank 9. In some embodiments of the present application, the recycling tank 9 and the fluid tank 321can share the same tank, so that the flow of the treating fluid becomes a cycle, and the treating fluid can be reused by the release treating device in the fluid tank 321, which is conducive to reducing waste of the treating fluid. In some embodiments of the present application, the recycling tank 9 may also be connected to the fluid tank 321, so that the treating fluid recycled by the recycling tank 9 flows into the fluid tank 321 for reuse by the release treating device.

In some embodiments of the present application, the recycling module further includes a filter member 10, and the filter member 10 is connected between the recycling hole 511 and the input end of the recycling power member 8.

The filter member 10 may refer to a device with filtering capability, which can filter the treating fluid to separate impurities such as combustible particles from the treating fluid, thereby improving the cleanliness of the treating fluid, maintaining the quality of the treating fluid, then maintaining the capability of the treating fluid to treat the released substance, and recycling the treating fluid.

According to some embodiments of the present application, as shown in Fig. 4 to Fig. 6, the present application provides a battery. In some embodiments of the present application, the battery includes a battery cell 1 and a release treating device which includes a treating space 2 provided with a treating member 3, and the treating space 2 formed by fitting a treating box 5 on an end surface of a battery box 4 is connected to an outer surface of a pressure relief mechanism. When thermal runaway occurs in the battery cell, the substance released by the pressure relief mechanism enters the treating space 2 via the connecting channel 6, the spray assembly 31 in the treating member 3 sprays treating fluid into the treating space 2 through the nozzle 312, and the treating fluid can treat the substance released by the pressure relief mechanism into the treating space, to reduce the temperature of the substance and the concentration of the combustible particles and of the combustible gas in the substance. The treated substance is discharged to the external space of the battery via the discharge channel 7. Since the substance released by the pressure relief mechanism has been treated by the treating fluid and the temperature and concentration of the combustible particles and the combustible gas of the substance have all decreased, when the substance is discharged to the external space of the battery, the possibility of combustion is greatly reduced, the battery is less prone to ignition when the thermal runaway occurs, and the safety of the battery can be improved. An embodiment of the present application provides an electrical device. The electrical device includes the battery for providing electrical energy provided in the above technical solution. Since the electrical device includes the battery provided in the above technical solution, the electrical device has high safety.

The electrical device may include, but is not limited to, a mobile phone, a tablet computer, a notebook computer, an electric toy, an electric tool, a scooter, an electric vehicle, a ship, or a spacecraft. The electric toy may include a fixed or mobile electric toy, such as a game console, an electric car toy, an electric ship toy, or an electric aircraft toy. The spacecraft may include an airplane, a rocket, a space shuttle, a spaceship, or the like.

Finally, it should be noted that the foregoing embodiments are only used to describe, but not to limit, the technical solutions of the present application. Although the present application is described in detail with reference to the foregoing embodiments, those of ordinary skill in the art should understand that they can still make modifications to the technical solutions described in the foregoing embodiments or make equivalent substitutions to some or all technical features thereof. These modifications or substitutions do not make the essences of the corresponding technical solutions depart from the scope of the technical solutions of the embodiments of the present application, and shall fall within the scope of the claims and specification of the present application. In particular, as long as there is no structural conflict, various technical features mentioned in the embodiments can be combined in any way. The present application is not limited to specific embodiments disclosed herein, but includes all technical solutions falling within the scope of the claims.

## Claims

1. A battery, **characterized by** comprising:
a battery cell having a pressure relief mechanism configured to release a substance inside the battery cell; and
a release treating device, comprising a treating space configured to be connected to an outer surface of the pressure relief mechanism so as to allow the substance released by the pressure relief mechanism to enter the treating space;
wherein the release treating device further comprises a treating member for treating the substance, and the treating member is disposed in the treating space.

2. The battery according to claim 1, **characterized in that** the treating member comprises:
a spray assembly for spraying treating fluid into the treating space, wherein the spray assembly is disposed in the treating space; and
a fluid supply assembly for delivering the treating fluid to the spray assembly, wherein the fluid supply assembly is connected to the spray assembly.

3. The battery according to claim 2, **characterized in that** the battery comprises a battery box in which the battery cell is placed, and the release treating device further comprises a treating box in which the treating space is formed and which is provided with an opening connected to the treating space, and fits on an end surface of the battery box through the opening.

4. The battery according to claim 3, **characterized in that** the spray assembly is configured to face the end surface, so as to spray the treating fluid towards the end surface.

5. The battery according to any one of claims 2-4, **characterized in that** the battery comprises a box body, in which a divider is provided to divide the box body into two spaces, one of the two spaces being the treating space, and the other of the two spaces being for placing the battery cell.

6. The battery according to claim 5, **characterized in that** the spray assembly is configured to face the divider, for allowing the treating fluid to exchange heat with the divider.

7. The battery according to any one of claims 3-6, **characterized in that** the spray assembly comprises a fluid supply pipeline connected to the fluid supply assembly and a nozzle connected to the fluid supply pipeline.

8. The battery according to claim 7, **characterized in that** a connecting portion is disposed on the fluid supply pipeline, a connecting groove is disposed on an inner wall of the treating space, and the connecting portion is connected to the connecting groove.

9. The battery according to claim 7 or 8, **characterized in that** the fluid supply pipeline is configured in a spiral shape, and a plurality of the nozzles are provided at equal intervals along the fluid supply pipeline.

10. The battery according to claim 9, **characterized in that** the fluid supply assembly comprises a fluid tank and a fluid delivery power member, and the fluid delivery power member is connected between the fluid tank and an inlet of the fluid supply pipeline.

11. The battery according to any one of claims 1-10, **characterized in that** the release treating device further comprises a connecting channel configured to connect the treating space to the outer surface of the pressure relief mechanism.

12. The battery according to claim 11, **characterized in that** a fluid blocking structure for blocking contact of the treating fluid with the battery cell is disposed in the connecting channel.

13. The battery according to claim 12, **characterized in that** the fluid blocking structure comprises a one-way valve, an inlet of the one-way valve is connected to the outer surface of the pressure relief mechanism, and an outlet of the one-way valve is connected to the treating space.

14. The battery according to claim 12 or 13, **characterized in that** the fluid blocking structure comprises a bent portion for blocking the treating fluid from flowing to the pressure relief mechanism along the connecting channel.

15. The battery according to any one of claims 11-14, **characterized in that** the battery cell comprises a first end surface and a second end surface, the pressure relief mechanism is disposed on the first end surface, an electrode terminal is disposed on the second end surface, and the first end surface is opposite to the connecting channel.

16. The battery according to claim 15, **characterized in that** a projection of the connecting channel at least partially overlaps with a projection of the pressure relief mechanism in a running-through direction of the connecting channel.

17. The battery according to any one of claims 1-16, **characterized in that** the release treating device further comprises a switch configured to connect the treating space to the outer surface of the pressure relief mechanism after being opened.

18. The battery according to claim 17, **characterized in that** the switch comprises a weak portion configured to connect the treating space to the outer surface of the pressure relief mechanism after being destroyed.

19. The battery according to claim 18, **characterized in that** the battery cell comprises a first end surface and a second end surface, the pressure relief mechanism is disposed on the first end surface, an electrode terminal is disposed on the second end surface, and the first end surface is opposite to the weak portion.

20. The battery according to claim 18 or 19, **characterized in that** in a thickness direction of the weak portion, a projection of the weak portion at least partially overlaps with a projection of the pressure relief mechanism.

21. The battery according to any one of claims 1-20, **characterized in that** the release treating device further comprises a discharge channel configured to connect the treating space to an external space of the battery.

22. The battery according to claim 21, **characterized in that** the release treating device further comprises a discharge switch, the discharge switch is disposed in the discharge channel, and the discharge switch is configured to connect the treating space to the external space of the battery through the discharge channel after being opened.

23. The battery according to any one of claims 1-22, **characterized in that** the battery further comprises a recycling module for recycling treating fluid, and the recycling module is connected to the treating space.

24. The battery according to claim 23, **characterized in that** the release treating device comprises a recycling portion disposed in the treating space, the recycling portion is configured to protrude towards a bottom of the release treating device to form a recycling groove, the recycling portion is provided with a recycling hole in a protruding direction, and the recycling hole connects the recycling module with the recycling groove.

25. The battery according to claim 24, **characterized in that** the recycling module comprises a recycling power member and a recycling tank, an input end of the recycling power member is connected to the recycling hole, and an output end of the recycling power member is connected to the recycling tank.

26. The battery according to claim 25, **characterized in that** the recycling module further comprises a filter member connected between the recycling hole and the input end of the recycling power member.

27. An electrical device, comprising the battery for providing electrical energy according to any one of claims 1-26.
